# EUROPEAN PATENT SPECIFICATION

(11) **EP 2 460 915 B1**
(45) Date of publication and mention of the grant of the patent: **15.10.2014**
(21) Application number: 10804783.8
(22) Date of filing: 28.07.2010
(51) Int. Cl.: D01F 9/16, D01F 9/22, D01F 9/14, D06M 10/00, D01D 10/00

(54) **METHOD FOR STABILIZING A CARBON-CONTAINING FIBRE AND METHOD FOR PRODUCING A CARBON FIBRE**
VERFAHREN ZUR STABILISIERUNG EINER KOHLENSTOFFHALTIGEN FASER SOWIE HERSTELLUNGSVERFAHREN FÜR EINE KOHLENSTOFFFASER
PROCÉDÉ DE STABILISATION DE FIBRES CONTENANT DU CARBONE ET PROCÉDÉ DE FABRICATION DE FIBRES À BASE DE CARBONE

(30) Priority: 28.07.2009 RU 2009128759
(43) Date of publication of application: 06.06.2012
(73) Proprietor: Soboleva, Marina Vladimirovna, Moscow 103287 (RU); Usov, Vitaliy Viktorovich, Moscow 117433 (RU)
(72) Inventor: SHMYREV, Vladislav Vasilievich, Moscow 115409 (RU)
(74) Representative: Nielsen, Kim Garsdal
(86) International application number: PCT/RU2010/000421
(87) International publication number: WO 2011/014105

(56) References cited:
- EP-A1- 1 845 179
- WO-A1-2006/101084
- CN-A- 1 696 364
- JP-A- H01 201 570
- RU-C1- 2 343 235
- RU-C1- 2 343 235
- US-A- 4 197 282
- US-B1- 6 733 737
- US-B1- 7 534 854

## Description

### Pertinent Art

The invention pertains to manufacture of carbon fibres with high tensile strength. Such fibres are mainly produced by a sequence of operations with an organic starting material (precursor) at different temperatures depending on the process stage specifications.

### Prior Knowledge

A common method for carbon fibre manufacture generally involves processing of a starting material (precursor) in three stages: stabilization (oxidation) by heating to 120-280 °C; once the fibres are stabilized (oxidized) - carbonization by heating to 400-1500 °C in a blanketing atmosphere of a gas such as nitrogen or argon; and depending on the fibre specifications- graphitization by heating to 1,600-3,000 °C in an inert atmosphere. Among these operations, stabilizing is the most time- and energy-consuming, taking up to 80 % of the carbon fibre manufacture process and lasting from 1 to 2 to 24 hours depending on finished product specifications.

One of known carbon fibre manufacture processes involves carbonization and graphitization of oxidized fibres by use of microwave irradiation. The oxidized fibres are sent through a waveguide treatment zone where they are exposed to high-frequency electromagnetic waves (European Patent Number 1845179, CI. D01 F 9/22, 2006). In this method the microwave irradiation is applied to oxidized fibres. Once oxidized, fibre can absorb microwaves. This property makes possible further treatment with microwaves. As described above, the technology currently in use involves exposure of previously oxidized fibres to microwave irradiation, whilst the fibre oxidization is known to be the most time-consuming step of fibre manufacture process. Notwithstanding that fibre carbonization and coating with graphite processes are significantly accelerated thanks to use of high-frequency electromagnetic waves, together with the oxidizing stage the carbon fibre manufacture process is rather time- and energy-consuming.

Another known carbon fibre manufacture method involves precursor oxidation followed by heat treatment to carbonize and graphitize the fibre (Russia Patent 2343235, CI. D01 F 9/22, 2009). This method includes oxidation of starting fibre (precursor) with microwave irradiation at 140-290 °C. Nonequilibrium low-temperature plasma medium is required to make the oxidizing possible. Once oxidized, fibre is heat-treated in two steps: at 400-650 °C in inert atmosphere or vacuum, and at 1,100-4,500 °C in inert atmosphere. The oxidized fibre can be also heat-treated with microwave irradiation in plasma or by absorption of microwave irradiation by the fibre. Use of microwave irradiation significantly speeds up all of the fibre processing stages. Generation and containment of stable plasma inside a device are this method's weaknesses. They complicate the process and the system inside which plasma media is created to run the processes required for fibre manufacture. Moreover, the known method requires evacuated treatment zone, pressure suppression, and use of unstable plasma, all of which make this known method technically demanding and increase its price.

Closest to the above is the carbon fibre manufacture method that involves stabilizing starting fibre in oxygen, air or ozone at 100-250 °C with temperature rise rate 0.1-0.5 ° per minute; followed by staged heat treatment of the oxidized fibre in inert medium at 300-1,500 °C (carbonization) and/or at 400-2,800 °C (graphitization). Fibre carbonization and/or coating with graphite are performed by fibre irradiation by 900-30,000 MHz microwaves (U.S. Patent Number 4197282, CI. 423-447.4, 1978).

This method's weakness is in the need to oxidize (stabilize) fibre prior to high-speed processing with microwave irradiation. Again, fibre is oxidized by the common and widely known method of heating in air or other oxidizing atmosphere for a long period of time. This involves low-production furnaces consuming substantial quantities of energy. High volumes of air moving at a high speed are required to generate and maintain specified temperature inside the furnace. This complicates the oxidation process.

### Disclosure of the Invention

The technical objective is to enhance the efficiency of fibre stabilization through cutting down its processing times and associated energy consumption, while increasing the carbon fibre manufacture process rate. A secondary objective is to improve performance and efficiency of carbon fibre manufacture by enhancing efficiency of carbonization and stabilization processes.

According to one aspect of the invention there is provided a method of carbon fibre precursor stabilization, in which the fibre is placed in gaseous medium and exposed to microwave irradiation while the gaseous medium is heated without generating plasma.

Authors of the invention unexpectedly discovered that heating of the gas in which fibre is immersed during stabilization enables the precursor fibre to lively absorb microwave irradiation (MWI) when exposed to such. As a result, the speed of the stabilization process increases substantially, while the process's energy intensity can be decreased due to reduction in energy quantities consumed at this stage with a small power input for MWI generation.

The prior knowledge either did not involve any microwave irradiation for the stabilization process as under normal conditions MWI is essentially not absorbed by the fibre and produces no self-maintained stabilizing (oxidizing) effect on the fibre, or involved MWI in combination with medium ionization only (such as with fibre treatment in monatomic oxygen (O), instead of diatomic molecular oxygen (02), e.g., U.S. Patent Number 7534854, published 5/19/2009). The latter case, however, specified use of plasma as a fundamental and essential condition for the precursor fibre stabilization process. It was the presence in the plasma of chemically active ions (including monatomic oxygen) exhibiting higher rates of diffusion into the fibre as compared to conventional oxidizing atmospheres (molecular oxygen, air) that was perceived to be the key factor of the stabilization (oxidation) process speed-up.

However, in contrast with the above, the authors observed that stabilization process can also be substantially sped up without ionization of the medium enveloping the fibre, with use of common mediums such as molecular oxygen, air, etc., and to achieve this, the medium is heated without generating plasma, as the immersed fibre is exposed to microwave irradiation. This new and unobvious to one skilled in the art technique makes possible cutting the time for fibre stabilization by a minimum of a third or a half as compared to conventional techniques (direct thermal stabilization without irradiation with microwaves). This exceeds the rates of known methods of fibre stabilization in microwave plasma. At the same time, the new technique allows speeding up the fibre stabilization without use of high-priced, power consuming and technically sophisticated methods such as generation and containment of plasma in a confined volume, in particular.

When the stabilization technique as claimed herein is employed, accelerated stabilization of carbon fibre precursor is observed within a wide range of process temperatures, with exposure to either pulsed or steady-state MWI of various power; this allows to infer that one skilled in the art can select necessary fibre stabilization modes experimentally, based on the knowledge disclosed herein and hereafter as this invention is disclosed.

In a preferable instance the fibre is immersed into an apparatus filled with gaseous medium, and the apparatus is heated as the fibre is exposed to microwave irradiation.

The gaseous atmosphere inside the apparatus is heated by means of heating the apparatus's walls to temperature T, where 50 °C ≤ T ≤ 500 °C, preferably 100 °C ≤ T ≤ 300 °C.

Without loss of generality, a known oxidizing oxygen-containing medium (e.g., molecular oxygen, air, etc.) can be employed as a process medium.

10 W min microwave irradiation is preferable for fibre stabilization.

According to a second aspect of the invention, the formulated problem is also worked in a carbon fibre manufacture technique involving, as a minimum, stages of carbon fibre precursor stabilization followed by carbonization wherein the carbon fibre-precursor is stabilized using any of the above methods.

In addition, the stabilized fibre can be exposed to a combined action of microwave irradiation in heated medium at the carbonization and/or graphitization stages (if fibre is required to be coated with graphite). Heating of the medium during carbonization and graphitization speeds up transformation of the stabilized fibre, which does not yet have sufficient conductance, into a material with a higher electrical conduction, better microwave irradiation absorption properties, and therefore higher carbonization and graphitization rates. Therefore, all stages of the fibre manufacture employing the technique claimed herein can run with use of microwave irradiation. This makes possible running the process continuously, boost the fibre processing times and cut down power consumption accordingly.

### Description of the Preferred Embodiment

An embodiment of the claimed group of inventions can be as follows. Natural or synthetic carbon-containing fibres like polyacrylonitrile, rayon, etc. can serve as a precursor fibre. At the first processing step (stabilization) the starting fibre (precursor) is placed into an apparatus filled with gaseous process medium. Well known in this field process gases, e.g. molecular oxygen, air, ozone, etc. can serve as the medium. Microwaves are introduced into the apparatus in such a manner that they are directed into the fibre treatment zone. For this purpose, any known assembly in which microwave irradiation affects the material being treated, such as waveguide, applicator, resonance or nonresonance vessel, etc. can serve as an apparatus.

At the same time, the apparatus is heated using any heat source, for which, without loss of generality, electric heaters, such as heater coil or induction coil, ceramic IR emitter, etc. can be used. One or more heaters (heating sources) can be placed outside the apparatus in such a manner that the released heat is directed onto the apparatus. In this manner, heating of the apparatus results in heating of the contained gaseous medium. However, one skilled in the art will know that in other options of embodiment of the invention the heat can be supplied to the gaseous medium not through the apparatus walls but instead directly from within the apparatus (e.g. by installing IR emitters inside the apparatus, or by filling the apparatus with the gas pre-heated by external sources). Heating of the medium surrounding the fibre results in partial absorption of the supplied heat by the fibre under treatment in the part located within the treatment zone.

Drawtwisting devices (e.g., straining pulleys or draw rolls) can be placed at the inlet and the outlet of the apparatus to secure and move the fibre through the apparatus at a specified speed providing treatment times inside the apparatus required to stabilize the fibre. Depending on the apparatus design, as well as that, location and capacity of heat and microwave irradiation sources, the drawing speed, heat input and irradiation power can be set by one skilled in the art experimentally, and output frequency can fall within the known range of 300 to 30,000 MHz.

Particularly, for the purpose of experiments, the invention authors the apparatus (1.5 m long cylinder waveguide) within the temperature range of 50 to 5,000 °C, feeding 10 to 1,000 W microwave irradiation into the fibre treatment zone with standard industry frequency of 2,400 MHz. For simplicity, average temperature at the waveguide walls was recorded, since precise measurement of temperature inside the apparatus and more so in proximity to the fibre (especially with relatively high temperatures) in the presence of microwave irradiation inside the apparatus can present certain problems. Experiments demonstrated that the best results were achieved when the apparatus walls were heated to 100 °C to 300 °C with feed of 10 to 500 W microwave irradiation. With apparatus heating temperatures below 100 °C and irradiation power less than 10 W; the stabilization process was running significantly slower, although without stopping completely, and to receive required fibre oxidation state drawing rate had to be reduced and, exposure intervals increased accordingly. Heating the apparatus above 300 °C, as well as increasing the irradiation power over 500 W did not demonstrate significant improvements.

Once stabilized, the fibre goes through high-temperature carbonization and, if required, graphitization processes which can generally involve any known technique. For example, fibre can be carbonized at 400-1,500 °C in blanketing atmosphere (e.g., nitrogen) with or without concurrent microwave irradiation action. Subject to the carbon fibre specifications, application purposes, etc., the manufacture process can be complete upon carbonization. Fibres of higher mechanical properties are produced with the finishing coating with graphite stage, where the fibres are subjected to thermal treatment in inert atmosphere within the temperature range of 1,600-3,000 °C. The process can be intensified by exposure of carbonized fibre to microwave irradiation, if required.

Giving due consideration to the above, the fibre (either carbonized or graphitized) at any manufacture process stage can be treated similarly: by exposure to microwave irradiation with heating of the corresponding process medium. Consequently, carbonization and/or graphitization of the fibre can run in a similar apparatus as stabilization, and exposure parameters (including irradiation power and apparatus wall heating temperature) can be selected experimentally considering the specifications for the treatment process and finished product, process capabilities, etc. All treatment processes can also be combined into a single continuous manufacturing cycle with the precursor fibre fed at the input and carbon fibre received at the output. This can be considered an additional merit of the claimed method.

In this manner, heating of the process medium, in particular through heating of the apparatus in which the fibre is treated, allows efficient use of microwave irradiation at the fibre stabilization stage, speeds up the carbon fibre manufacture process sufficiently, cuts down power consumption and makes it possible to discard bulky metal-intensive equipment; while speeding up the fibre processing times at the carbonization and graphitization stages. In this regard, as noted above, optimal processing parameters can be easily selected by one skilled in the art based on specific carbon fibre manufacture task requirements, as well as the apparatus type and design.

In closing, it should be noted that all the examples described above, including specific fibre treatment parameters experimentally obtained by the authors, are only given for illustration and better understanding of the concept of the invention and must not be seen as limiting the extent of legal protection being claimed herein and determined in full solely by the appended claims.

### Industrial Applicability

The invention can be used successfully in chemical and textile industries to produce high-strength carbon fibre.

## Claims

1. A method for stabilizing carbon fibre precursors, in which the fibre precursors are placed into a gaseous medium and subjected to treatment with microwave radiation as the gaseous medium is heated without generating plasma.

2. A method according to claim 1, wherein the fibre precursors are immersed into an apparatus filled with gaseous medium, and the apparatus is heated as the fibre is exposed to microwave irradiation.

3. A method according to claim 2, wherein the apparatus walls are heated to temperature T, where 50 °C ≤ T ≤ 500 °C.

4. A method according to claim 3, wherein the temperature T for heating the apparatus walls is selected within the range of 100 °C ≤ T ≤ 300 °C.

5. A method according to any of claims 1 through 4, wherein the fibre precursors are immersed in oxidizing oxygen-containing medium.

6. A method according to any of claims 1 through 4, wherein 10 W minimum microwave irradiation is employed to stabilize the fibre precursors.

7. A method according to claim 5, wherein 10 W minimum microwave irradiation is employed to stabilize the fibre precursors.

8. A method of carbon fibre manufacture, involving, as a minimum, stages of a carbon fibre precursor stabilization followed by carbonization wherein the carbon fibre precursors are stabilized according to any of claims 1 through 7.

9. A method according to claim 8, wherein for carbonization, the stabilized fibre precursors are placed into a gaseous blanketing medium and subjected to treatment with microwave radiation as the gaseous blanketing medium is heated.

10. A method according to any of claims 8 through 9, wherein once carbonized, the fibre is graphitized.

11. A method according to claim 10, wherein during graphitization the carbonized fibre is exposed to microwave irradiation inside heated inert atmosphere.

## Patentansprüche

1. Verfahren zum Stabilisieren von Kohlenstofffaservorläufern, in dem die Faservorläufer in einem gasförmigen Medium angeordnet werden und einer Behandlung mit Mikrowellenstrahlung unterzogen werden, wenn das gasförmige Medium erwärmt wird, ohne Plasma zu erzeugen.

2. Verfahren nach Anspruch 1, wobei die Faservorläufer in eine mit einem gasförmigen Medium gefüllte Vorrichtung getaucht werden, und die Vorrichtung erwärmt wird, wenn die Faser Mikrowellenbestrahlung ausgesetzt wird.

3. Verfahren nach Anspruch 2, wobei die Vorrichtungswände auf eine Temperatur T erwärmt werden, wobei 50°C ≤ T ≤ 500°C.

4. Verfahren nach Anspruch 3, wobei die Temperatur T zum Erwärmen der Vorrichtungswände im Bereich von 100°C ≤ T ≤ 300°C gewählt wird.

5. Verfahren nach einem der Ansprüche 1 bis 4, wobei die Faservorläufer in ein oxidierendes sauerstoffhaltiges Medium getaucht werden.

6. Verfahren nach einem der Ansprüche 1 bis 4, wobei minimal 10 W Mikrowellenbestrahlung eingesetzt wird, um die Faservorläufer zu stabilisieren.

7. Verfahren nach Anspruch 5, wobei minimal 10 W Mikrowellenbestrahlung eingesetzt wird, um die Faservorläufer zu stabilisieren.

8. Verfahren zur Kohlenstofffaserherstellung, das mindestens die Schritte einer Kohlenstofffaservorläuferstabilisierung gefolgt von einer Karbonisation aufweist, wobei die Kohlenstofffaservorläufer nach einem der Ansprüche 1 bis 7 stabilisiert werden.

9. Verfahren nach Anspruch 8, wobei zur Karbonisation die stabilisierten Faservorläufer in einem gasförmigen Schutzmedium angeordnet werden und einer Behandlung mit Mikrowellenstrahlung unterzogen werden, wenn das gasförmige Schutzmedium erwärmt wird.

10. Verfahren nach einem der Ansprüche 8 bis 9, wobei die Faser graphitisiert wird, sobald sie karbonisiert ist.

11. Verfahren nach Anspruch 10, wobei während der Graphitisation die karbonisierte Faser in einer erwärmten Schutzgasatmosphäre Mikrowellenbestrahlung ausgesetzt wird.

## Revendications

1. Procédé de stabilisation de précurseurs de fibre de carbone, dans lequel les précurseurs de fibre sont placés dans un milieu gazeux et soumis à un traitement avec un rayonnement micro-ondes alors que le milieu gazeux est chauffé sans générer de plasma.

2. Procédé selon la revendication 1, dans lequel les précurseurs de fibre sont plongés dans un appareil rempli avec un milieu gazeux, et l'appareil est chauffé alors que la fibre est exposée à une irradiation micro-ondes.

3. Procédé selon la revendication 2, dans lequel les parois de l'appareil sont chauffées à une température T, où 50 °C ≤ T ≤ 500 °C.

4. Procédé selon la revendication 3, dans lequel la température T pour chauffer les parois de l'appareil est choisie dans la plage de 100 °C ≤ T ≤ 300 °C.

5. Procédé selon l'une quelconque des revendications 1 à 4, dans lequel les précurseurs de fibre sont plongés dans un milieu oxydant contenant de l'oxygène.

6. Procédé selon l'une quelconque des revendications 1 à 4, dans lequel une irradiation micro-ondes de 10 W minimum est employée pour stabiliser les précurseurs de fibre.

7. Procédé selon la revendication 5, dans lequel une irradiation micro-ondes de 10 W minimum est employée pour stabiliser les précurseurs de fibre.

8. Procédé de fabrication d'une fibre de carbone, impliquant, au minimum, des étapes de stabilisation de précurseurs de fibre de carbone puis de carbonisation, les précurseurs de fibre de carbone étant stabilisés selon l'une quelconque des revendications 1 à 7.

9. Procédé selon la revendication 8, dans lequel pour la carbonisation, les précurseurs de fibre stabilisés sont placés dans un milieu gazeux d'inertage et soumis à un traitement avec un rayonnement micro-ondes alors que le milieu gazeux d'inertage est chauffé.

10. Procédé selon l'une quelconque des revendications 8 et 9, dans lequel une fois carbonisée, la fibre est graphitisée.

11. Procédé selon la revendication 10, dans lequel pendant la graphitisation la fibre carbonisée est exposée à une irradiation micro-ondes à l'intérieur d'une atmosphère inerte chauffée.
